# EUROPÄISCHE PATENTSCHRIFT

(11) **EP 2 448 791 B1**
(45) Veröffentlichungstag und Bekanntmachung des Hinweises auf die Patenterteilung: **28.01.2015**
(21) Anmeldenummer: 10720283.0
(22) Anmeldetag: 30.04.2010
(51) Int. Cl.: B60S 1/16

(54) **ANTRIEBSEINHEIT EINER SCHEIBENWISCHVORRICHTUNG IN EINEM FAHRZEUG**
DRIVE UNIT FOR A WIPER DEVICE IN A VEHICLE
UNITÉ D'ENTRAÎNEMENT D'UN DISPOSITIF D'ESSUIE-GLACE D'UN VÉHICULE

(30) Priorität: 29.06.2009 DE 102009027285
(43) Veröffentlichungstag der Anmeldung: 09.05.2012
(73) Patentinhaber: Robert Bosch GmbH, 70442 Stuttgart (DE)
(72) Erfinder: MAIER, Gerald, 77833 Ottersweier-Unzhurst (DE); LAURENT, Stephane, F-67100 Strasbourg (FR); WEGNER, Norbert, 77815 Buehl (DE)
(86) Internationale Anmeldenummer: PCT/EP2010/055879
(87) Internationale Veröffentlichungsnummer: WO 2011/000594

(56) Entgegenhaltungen:
- EP-A2- 1 468 886
- WO-A1-99/19188
- DE-A1- 4 339 593
- DE-A1- 10 313 734
- DE-A1-102007 027 662

## Beschreibung

Die Erfindung bezieht sich auf eine Antriebseinheit einer Scheibenwischvorrichtung in einem Fahrzeug nach dem Oberbegriff des Anspruches 1.

### Stand der Technik

Die DE 103 13 734 A1 offenbart eine Scheibenwischvorrichtung mit einer Antriebseinheit, die in einem gemeinsamen Gehäuse einen elektrischen Antriebsmotor sowie ein Getriebe umfasst. Das Getriebe ist mit einer Abtriebswelle versehen, die von dem elektrischen Antriebsmotor angetrieben wird und mit einem Gestängeteil eines Wischergestänges verbunden ist. Im Betrieb des Motors wird die Motordrehbewegung in eine pendelnde Drehbewegung eines Wischerarms des Wischergestänges umgesetzt.

Die Kopplung zwischen der Abtriebswelle und dem Gestängeteil des Wischergestänges erfolgt bei bekannten Ausführungen über einen konusförmigen Abschnitt auf der Mantelfläche der Abtriebswelle, der eine gerändelte Oberfläche zur Reibungserhöhung aufweist. Hierbei ist zu beachten, dass die Oberfläche während der Montage und bei der Überprüfung des Antriebsmotors nicht beschädigt werden darf, um die sichere Kopplung zwischen der Abtriebswelle und dem Gestängeteil nicht zu gefährden.

Weiterer Stand der Technik ist aus der DE 10 2007 027 662 A1 bekannt.

### Offenbarung der Erfindung

Der Erfindung liegt die Aufgabe zu Grunde, mit einfachen konstruktiven Maßnahmen eine Antriebseinheit einer Scheibenwischvorrichtung in der Weise auszubilden, dass eine sichere Anbindung der Abtriebswelle an ein Wischergestängeteil gewährleistet ist.

Diese Aufgabe wird erfindungsgemäß mit den Merkmalen des Anspruches 1 gelöst. Die Unteransprüche geben zweckmäßige Weiterbildungen an.

Die erfindungsgemäße Antriebseinheit wird in Scheibenwischvorrichtungen in Kraftfahrzeugen eingesetzt, beispielsweise als Frontscheibenwischvorrichtung oder als Heckscheibenwischvorrichtung. Die Antriebseinheit der Scheibenwischvorrichtung umfasst einen elektrischen Antriebsmotor, dem zweckmäßigerweise eine Getriebeanordnung in einem gemeinsamen Gehäuse zugeordnet ist, welche eine Abtriebswelle aufweist, die im montierten Zustand mit einem Wischergestängeteil, insbesondere einer Motorkurbelwelle gekoppelt ist. Über das Wischergestängeteil wird das Wischergestänge zum Antrieb eines Wischerarms betätigt. Die Verbindung zwischen der Abtriebwelle und dem Wischergestängeteil erfolgt über einen Wischerkoppelabschnitt an der Mantelfläche der Abtriebswelle. An diesem Wischerkoppelabschnitt greift das Wischergestängeteil an, das zweckmäßigerweise drehfest mit der Abtriebswelle über den Wischerkoppelabschnitt verbunden ist.

Erfindungsgemäß ist an der Abtriebswelle zusätzlich zum Wischerkoppelabschnitt ein Prüfkoppelabschnitt ausgebildet, der zur Verbindung der Abtriebswelle mit einem Prüfstandsbauteil dient. Über den Prüfkoppelabschnitt kann die Funktionstüchtigkeit der Antriebseinheit bei der Leistungsüberprüfung des Wischermotors in einem Prüfstand getestet werden. Hierbei wird die Abtriebswelle der Antriebseinheit mit dem Prüfstand verbunden, wobei der Antriebsmotor ein Drehmoment zur Überwindung eines vom Prüfstand erzeugten Widerstandes aufbringen muss. Das Drehmoment wird über den Prüfkoppelabschnitt der Abtriebswelle übertragen, wobei auf Grund der separaten Ausführung von Wischerkoppelabschnitt und Prüfkoppelabschnitt sichergestellt ist, dass die Funktionsprüfung des Antriebsmotors nicht zu einer Beschädigung des Wischerkoppelabschnittes führt. Auf diese Weise ist eine sichere und feste Verbindung zwischen der Abtriebswelle und dem Wischergestänge nach erfolgtem Einbau der Antriebseinheit sichergestellt.

Grundsätzlich kommen verschiedene Ausführungen des Prüfkoppelabschnittes in Betracht. Bevorzugt ist der Prüfkoppelabschnitt als ein Formschlussabschnitt ausgebildet, der eine nicht-rotationssymmetrische Querschnittsgeometrie aufweist, an der ein entsprechendes Gegenstück formschlüssig angreift, so dass in Drehrichtung um die Achse der Abtriebswelle ein Formschluss gebildet ist. Der Formschlussabschnitt kann sich an der äußeren Mantelfläche der Abtriebswelle befinden. Erfindungsgemäß ist es vorgesehen, dass der Formschlussabschnitt als eine Ausnehmung in der Stirnseite der Abtriebswelle ausgeführt ist und eine Formschlussgeometrie aufweist, die als Innentorx oder Innenmehrkant ausgebildet ist. In den Innentorx bzw. Innenmehrkant an der Stirnseite der Abtriebswelle kann ein entsprechend geformtes Gegenstück formschlüssig eingreifen. Die Ausbildung als Ausnehmung an der Stirnseite der Abtriebswelle hat den Vorteil, dass die Mantelfläche der Abtriebswelle keine weitere Bearbeitung erfordert und dass zudem eine Platz sparende Ausführung für den Prüfkoppelabschnitt gegeben ist.

Der Wischerkoppelabschnitt besitzt bevorzugt eine gerändelte Oberfläche, auf die ein Wischergestängeteil, insbesondere eine Kurbel des Wischergestänges aufgesetzt und fest verbunden wird. Dieser gerändelte Abschnitt befindet sich vorzugsweise an einem konusförmigen Bereich, der im Übergang zwischen zwei Zylinderabschnitten der Abtriebswelle mit unterschiedlichem Durchmesser liegt. Auf dem konusförmigen Abschnitt wird eine komplementär geformte Ausnehmung im betreffenden Wischergestängeteil aufgesetzt.

Gemäß weiterer zweckmäßiger Ausführung ist vorgesehen, dass Wischerkoppelabschnitt und Prüfkoppelabschnitt axial zueinander beabstandet sind, so dass zwischen diesen Abschnitten ein zwischenliegender axialer Bereich liegt. Grundsätzlich möglich ist aber auch insbesondere in der Ausführung des Prüfkoppelabschnittes als in die Stirnseite der Abtriebswelle eingebrachte Ausnehmung eine axiale Überschneidung von Wischerkoppelabschnitt und Prüfkoppelabschnitt.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer Scheibenwischvorrichtung in einem Kraftfahrzeug,
- Fig. 2: eine Draufsicht auf eine Antriebseinheit für die Scheibenwischvorrichtung, mit einem elektrischen Antriebsmotor, der über ein Getriebe eine Abtriebswelle antreibt,
- Fig. 3: eine perspektivische Ansicht der Abtriebswelle, die im Bereich ihrer Stirnseite mit einem Innentorx versehen ist,
- Fig. 4: eine vergrößerte Ansicht aus dem Bereich der Stirnseite der Abtriebswelle.

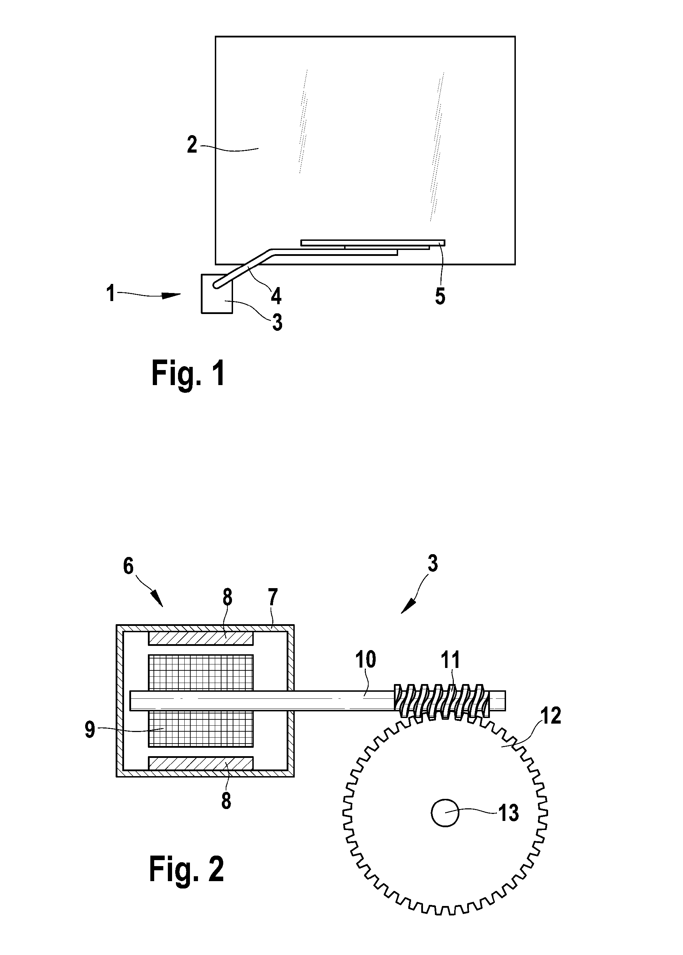

Die in Fig. 1 gezeigte Scheibenwischvorrichtung 1 wird in Kraftfahrzeugen eingesetzt und dient zum Wischen einer Fahrzeugscheibe 2. Die Scheibenwischvorrichtung 1 umfasst eine Antriebseinheit 3 sowie ein Wischergestänge, dem ein Wischerarm 4 mit daran angeordnetem Wischblatt 5 zugeordnet ist, welches im Betrieb an der Fahrzeugscheibe 2 aufliegt.

Wie der Detaildarstellung der Antriebseinheit 3 gemäß Fig. 2 zu entnehmen, umfasst die Antriebseinheit 3 einen elektrischen Antriebsmotor 6 sowie ein Getriebe, bestehend aus einer Schnecke 11 und einem hiermit kämmenden Schneckenrad 12. Die Schnecke 11 ist drehfest mit der Rotorwelle 10 des Antriebsmotors verbunden, die einen bestrombare Spule 9 trägt, welche im Polgehäuse 7 mit an der Innenwand des Polgehäuses angeordneten Permanentmagneten 8 umläuft.

Das Schneckenrad 12 ist drehfest mit einer Abtriebswelle 13 gekoppelt, über die die Drehbewegung auf das Wischergestänge übertragen wird. Die Abtriebswelle 13 ist zu diesem Zweck mit einem Gestängeteil des Wischergestänges drehfest gekoppelt.

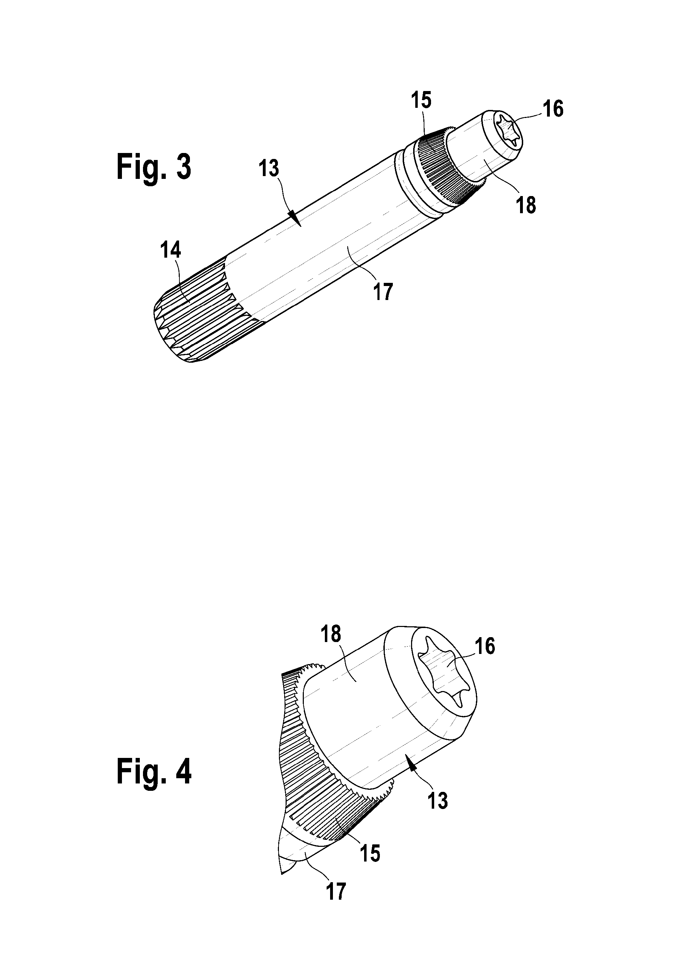

Wie Fig. 3 sowie der vergrößerten Darstellung gemäß Fig. 4 zu entnehmen, weist die Abtriebswelle 13 über ihre axiale Länge verschiedene Abschnitte auf, die zur Anbindung an verschiedene Bauteile der Scheibenwischvorrichtung bzw. eines Prüfstandes dienen. Die Abtriebswelle 13 besitzt einen ersten gerändelten Abschnitt 14, der benachbart zu einer Stirnseite der Abtriebswelle angeordnet ist und über den die drehfeste Kopplung zum Schneckenrad 12 (Fig. 2) erfolgt. Benachbart zur gegenüberliegenden Stirnseite befindet sich zwischen zwei zylindrischen Bereichen 17 und 18 unterschiedlichen Durchmessers ein konusförmiger Wischerkoppelabschnitt 15, der ebenfalls mit einer gerändelten Oberfläche versehen ist. Über den Wischerkoppelabschnitt 15 erfolgt die drehfeste Anbindung an eine Kurbel bzw. ein Gestängeteil des Wischergestänges. Der Wischerkoppelabschnitt 15 liegt auf axialem Abstand zur Stirnseite der Abtriebswelle 13, in die ein Prüfkoppelabschnitt 16 in Form eines Formschlussabschnittes eingebracht ist. Der Formschlussabschnitt ist als eine sich axial erstreckende Ausnehmung in der Stirnseite der Abtriebswelle 13 ausgebildet und weist im Ausführungsbeispiel die sternförmige Querschnittsgeometrie eines Innentorx 16 auf, wobei grundsätzlich auch sonstige, nicht-rotationssymmetrische Querschnittsgeometrien wie beispielsweise ein Innenmehrkant in Betracht kommen. In den Innentorx 16 kann ein Bauteil mit korrespondierender Querschnittsgeometrie eingeführt werden, um auf diese Weise eine formschlüssige, weitere Verbindung insbesondere zu einem Prüfstand herzustellen, über den eine Leistungsprüfung des Antriebsmotors durchgeführt werden kann.

Wischerkoppelabschnitt 15 und Prüfkoppelabschnitt 16 sind separat und unabhängig voneinander ausgebildet, was den Vorteil aufweist, dass die gerändelte Oberfläche des Wischerkoppelabschnittes 15 während der Anbindung der Abtriebswelle 13 an den Prüfstand unbeschädigt bleibt. Nach Beendigung der Leistungsprüfung auf dem Prüfstand wird die Verbindung zwischen der Abtriebwelle und dem Prüfstandsbauteil gelöst und die Antriebseinheit kann mit der Scheibenwischvorrichtung in das Fahrzeug eingesetzt werden, wobei eine sichere und dauerhafte Verbindung der Abtriebswelle 13 über den Wischerkoppelabschnitt 15 mit dem Bauteil des Wischergestänges gewährleistet ist.

## Patentansprüche

1. Antriebseinheit einer Scheibenwischvorrichtung in einem Fahrzeug, mit einem elektrischen Antriebsmotor (6), der eine Abtriebswelle (13) antreibt, welche mit einem Wischergestänge gekoppelt ist, wobei an der Mantelfläche der Abtriebswelle (13) ein Wischerkoppelabschnitt (15) zur Kopplung mit einem Gestängeteil des Wischergestänges ausgebildet ist, wobei zusätzlich zum Wischerkoppelabschnitt (15) ein Prüfkoppelabschnitt (16) zur Verbindung mit einem Prüfstandsbauteil an der Abtriebswelle (13) gebildet ist und der Prüfkoppelabschnitt (16) als Formschlussabschnitt ausgeführt ist, der als Ausnehmung in der Stirnseite der Abtriebswelle (13) ausgebildet ist **dadurch gekennzeichnet, dass** die Ausnehmung als Innentorx oder Innenmehrkant ausgebildet ist.

2. Antriebseinheit nach einem der Anspruch 1, **dadurch gekennzeichnet, dass** der Wischerkoppelabschnitt (15) eine gerändelte Oberfläche aufweist.

3. Antriebseinheit nach einem der Ansprüche 1 oder 2 **dadurch gekennzeichnet, dass** der Wischerkoppelabschnitt (15) in einem konusförmigen Bereich im Übergang zwischen zwei Zylinderabschnitten der Abtriebswelle (13) mit unterschiedlichem Durchmesser angeordnet ist.

4. Antriebseinheit nach einem der Ansprüche 1 bis 3, **dadurch gekennzeichnet, dass** der Wischerkoppelabschnitt (15) und der Prüfkoppelabschnitt (16) axial zueinander beabstandet sind.

5. Scheibenwischvorrichtung in einem Fahrzeug mit einer Antriebseinheit nach einem der Ansprüche 1 bis 4.

## Claims

1. Drive unit for a wiper device in a vehicle, with an electric drive motor (6) which drives an output shaft (13) which is coupled to a wiper linkage, wherein a wiper coupling section (15) for coupling to a linkage part of the wiper linkage is formed on the lateral surface of the output shaft (13), wherein, in addition to the wiper coupling section (15), a test coupling section (16) for connecting to a test bench component is formed on the output shaft (13), and the test coupling section (16) is designed as an interlocking section which is in the form of a recess in the end side of the output shaft (13), **characterized in that** the recess is in the form of a torx socket or a polygonal socket.

2. Drive unit according to Claim 1, **characterized in that** the wiper coupling section (15) has a knurled surface.

3. Drive unit according to either of Claims 1 and 2, **characterized in that** the wiper coupling section (15) is arranged in a conical region in the transition between two cylinder sections of the output shaft (13) of differing diameter.

4. Drive unit according to one of Claims 1 to 3, **characterized in that** the wiper coupling section (15) and the test coupling section (16) are spaced apart from each other axially.

5. Wiper device in a vehicle with a drive unit according to one of Claims 1 to 4.

## Revendications

1. Unité d'entraînement d'un dispositif d'essuieglace dans un véhicule, comprenant un moteur d'entraînement électrique (6) qui entraîne un arbre de sortie (13), lequel est accouplé à une tringlerie d'essuie-glace, une portion d'accouplement d'essuie-glace (15) pour l'accouplement avec une partie de tringlerie de la tringlerie d'essuie-glace étant réalisée sur la surface d'enveloppe de l'arbre de sortie (13), une portion d'accouplement d'essai (16) pour la liaison à un composant de banc d'essai étant réalisée sur l'arbre de sortie (13) en plus de la portion d'accouplement d'essuie-glace (15) et la portion d'accouplement d'essai (16) étant réalisée sous forme de portion d'engagement par complémentarité de formes qui est réalisée sous forme d'évidement dans le côté frontal de l'arbre de sortie (13), **caractérisée en ce que** l'évidement est réalisé sous forme d'empreinte Torx ou sous forme d'empreinte polygonale.

2. Unité d'entraînement selon la revendication 1, **caractérisée en ce que** la portion d'accouplement d'essuie-glace (15) comprend une surface moletée.

3. Unité d'entraînement selon l'une quelconque des revendications 1 et 2, **caractérisée en ce que** la portion d'accouplement d'essuie-glace (15) est disposée dans une région conique dans la transition entre deux portions cylindriques de l'arbre de sortie (13) présentant des diamètres différents.

4. Unité d'entraînement selon l'une quelconque des revendications 1 à 3, **caractérisée en ce que** la portion d'accouplement d'essuie-glace (15) et la portion d'accouplement d'essai (16) sont espacées axialement l'une de l'autre.

5. Dispositif d'essuie-glace dans un véhicule comprenant une unité d'entraînement selon l'une quelconque des revendications 1 à 4.
